# EUROPEAN PATENT SPECIFICATION

(11) **EP 2 589 800 B1**
(45) Date of publication and mention of the grant of the patent: **14.06.2017**
(21) Application number: 11800730.1
(22) Date of filing: 24.06.2011
(51) Int. Cl.: F03D 7/04, F03D 7/02

(54) **WINDMILL PITCH CONTROL DEVICE**
VORRICHTUNG ZUR STEUERUNG DES STEIGUNGSWINKELS EINER WINDMÜHLE
DISPOSITIF DE COMMANDE DU PAS D'UNE ÉOLIENNE

(30) Priority: 01.07.2010 JP 2010150946
(43) Date of publication of application: 08.05.2013
(73) Proprietor: Nabtesco Corporation, Tokyo 102-0093 (JP)
(72) Inventor: HIBINO,Toshiharu, Fuwa-gun Gifu 503-2121 (JP); KODAMA,Haruo, Fuwa-gun Gifu 503-2121 (JP)
(74) Representative: Isarpatent
(86) International application number: PCT/JP2011/064510
(87) International publication number: WO 2012/002265

(56) References cited:
- WO-A1-2004/067958
- WO-A1-2007/132303
- JP-A- 2005 023 867
- JP-A- 2008 075 521
- US-A1- 2007 024 227
- US-A1- 2007 267 872

## Description

### Technical Field

The present invention relates to a windmill pitch control device that includes an electricity accumulator capable of applying electricity to an electric motor connected to a pitch drive device for changing the pitch angle of a blade of a windmill that is provided rotatably on a main shaft portion of the windmill, and that is able to control the pitch angle of the blade with electricity of the electricity accumulator such that the pitch angle is changed in a direction in which the wind pressure exerted on the blade is reduced.

### Background Art

A windmill may be provided with a windmill pitch control device that controls the pitch angle of blades provided rotatably on a main shaft portion of the windmill. As such a windmill pitch control device, a windmill pitch control device is known that includes a battery serving as an electricity accumulator capable of applying electricity to an electric motor coupled to a pitch drive device for changing the pitch angle of a blade of a windmill, and that controls the pitch angle of the blade with the electricity of the battery so as to change the pitch angle in a direction in which the wind pressure exerted on the blade is reduced (see Patent Document 1). In the windmill pitch control device disclosed in Patent Document 1, during normal operation, the electric motor coupled to the pitch drive device is driven as a result of electricity being supplied to the electric motor from an external power source via an electricity controller (221), which serves as a motor controller that controls supply of electricity to the electric motor coupled to the pitch drive device to control operation of the electric motor. Note that the external power source is provided as a main power source that is a power source for supplying electricity during normal operation. In the case of power failure, on the other hand, the source of electricity to the electric motor coupled to the pitch drive device is switched from the main power source to a battery (220) by the electricity controller. Then, the pitch angle of the blade is controlled such that the pitch angle is changed in a direction in which the wind pressure exerted on the blade is reduced (such that feathering of the blade is performed). This is aimed at preventing the windmill from being damaged by an abnormal increase in the rotational speed of the blades and the main shaft portion.
Another windmill pitch control device is known from Patent Document 2.

### Citation List

### Patent Document

Patent Document 1: JP2003-222070A (page 5, FIG. 3)
Patent Document 2: WO 2007/132303 A1

### Disclosure of the Invention

### Problem to be Solved by the Invention

The windmill pitch control device disclosed in Patent Document 1 is configured such that in the case where a loss of an electricity supply capability of the main power source has occurred due to occurrence of power failure, feathering is performed for changing the pitch angle in a direction in which the wind pressure exerted on the blade is reduced, by supplying electricity from the battery. However, in this windmill pitch control device, feathering is performed as mentioned above at the time of a loss of the electricity supply capability of the main power source, and therefore, pitch control for changing the pitch angle of the blade cannot be performed. Accordingly, the windmill pitch control device has a problem of inability to continue to generate electricity because the pitch control necessary for electricity generation cannot be performed at the time of a loss of the electricity supply capability of the main power source.

In light of the foregoing situation, it is an object of the present invention to provide a windmill pitch control device capable of performing feathering, and continuing to generate electricity even at the time of a loss of the electricity supply capability of the main power source.

### Means for Solving the Problems

A windmill pitch control device according to a first aspect of the present invention for achieving the above-stated object is a windmill pitch control device that includes the features of claim 1. A windmill pitch control device includes an electricity accumulator capable of applying electricity to an electric motor coupled to a pitch drive device for changing a pitch angle of a blade of a windmill that is provided rotatably on a main shaft portion of the windmill, and that is able to control the pitch angle of the blade with the electricity of the electricity accumulator such that the pitch angle is changed in a direction in which a wind pressure exerted on the blade is reduced, the windmill pitch control device comprising: a motor controller that controls storage and discharge of the electricity in and from the electricity accumulator, and controls the electric motor based on a control signal for pitch control for changing the pitch angle of the blade from a pitch controller that transmits the control signal; and an electricity accumulator operation monitoring portion that monitors an operational state of the electricity accumulator, wherein the motor controller is connected to a main power source that is a power source for supplying electricity during normal operation such that the electricity is supplied to the motor controller, and at the time of a loss of an electricity supply capability of the main power source, the motor controller controls the electric motor with the electricity supplied from the electricity accumulator and continues the pitch control, based on the control signal, and control for changing the pitch angle of the blade in a direction in which the wind pressure is reduced is performed based on a result of monitoring by the electricity accumulator operation monitoring portion.

According to the first aspect of the present invention, at the time of a loss of the electricity supply capability of the main power source, the motor controller controls the electric motor with the electricity supplied from the electricity accumulator to continue the pitch control, based on the control signal from the pitch controller. Therefore, with the windmill pitch control device according to the present invention, it is possible to continue to generate electricity even at the time of loss of the power supply capability of the main power source. Furthermore, with the windmill pitch control device according to the present invention, feathering is performed for changing the pitch angle in a direction in which the wind pressure exerted on the blade is reduced, based on the result of monitoring by the electricity accumulator operation monitoring portion that monitors the operational state of the electricity accumulator. Thus, the windmill is prevented from being damaged due to an abnormal increase in the rotational speed of the blade and the main shaft portion.

Accordingly, according to the present invention, it is possible to provide a windmill pitch control device capable of performing feathering, and continuing to generate electricity even at the time of a loss of the electricity supply capability of the main power source.

A windmill pitch control device according to a second aspect of the present invention is the windmill pitch control device of the first aspect, wherein a plurality of the motor controllers are provided in one-to-one correspondence to a plurality of the blades provided on the windmill, and if an abnormality has occurred in any of the motor controllers, the pitch control for the blade corresponding to an abnormal controller that is the motor controller in which the abnormality has occurred is performed by a normal controller that is the motor controller which is normal and different from the abnormal controller.

According to the second aspect of the present invention, if an abnormality has occurred in any of the motor controllers, the pitch control for the blade corresponding to the abnormal controller is performed by the normal controller that is different from the abnormal controller. Therefore, it is possible to continue to generate electricity not only at the time of a loss of the electricity supply capability of the main power source, but also in the case where an abnormality has occurred in any of the motor controllers.

A windmill pitch control device according to a third aspect of the present invention is the windmill pitch control device of the first aspect, wherein the electric motor is provided as an induction motor, and the windmill pitch control device further comprises: a normal drive line that connects the motor controller to the electric motor, and is able to supply the electricity to the electric motor during the normal operation; a direct drive line that connects directly, or via the normal drive line, the electric motor to a direct power source provided as an alternating-current power source which is different from the main power source, and that is able to supply the electricity from the direct power source to the electric motor and drive the electric motor; a normal drive switch that is provided on the normal drive line and is able to switch between a state where the motor controller and the electric motor are connected to each other and a state where they are disconnected from each other; a direct drive switch that is provided on the direct drive line and is able to switch between a state where the direct power source and the electric motor are connected to each other and a state where they are disconnected from each other; and a pitch angle detector that detects the pitch angle of the blade.

According to the third aspect of the present invention, the normal drive line and the normal drive switch provided on this normal drive line, the direct drive line that connects the alternating-current direct power source to the induction motor and the direct drive switch provided on this direct drive line, and the pitch angle detector are provided. Therefore, at the time of a loss of the electricity supply capability of the main power source, it is possible to perform, with the electricity of the direct power source, feathering for changing the pitch angle in a direction in which the wind pressure is exerted on the blade, by turning the direct drive switch to the on state after turning the normal drive switch to the off state. It is then possible to stop, at a predetermined position, the feathering operation in which the pitch angle of the blade is changed and to complete feathering, based on a result of detection by the pitch angle detector. Accordingly, feathering can be performed also with the electricity of the direct power source, and it is therefore possible to perform feathering even if the capability of the electricity accumulator has degraded or an abnormality has occurred in the electricity accumulator while the pitch control is being performed with the electricity of the electricity accumulator.

A windmill pitch control device according to a fourth aspect of the present invention is the windmill pitch control device of the third aspect, wherein a plurality of the motor controllers, a plurality of the pitch angle detectors, a plurality of the direct drive lines, a plurality of the direct drive switches, a plurality of the normal drive lines, and a plurality of the normal drive switches are provided in one-to-one correspondence to a plurality of the blades provided on the windmill, the direct drive lines are connected to the same direct power source via a common direct drive line provided to be shared by the direct drive lines, and the common direct drive line is provided with a direct power source switch capable of switching between a state where the direct power source and the direct drive lines are connected to each other and a state where they are disconnected from each other.

According to the fourth aspect of the present invention, the motor controllers, the pitch angle detectors, the direct drive lines, the direct drive switches, the normal drive lines, and the normal drive switches are provided so as to correspond to the respective blades. The direct drive lines are connected to the same direct power source via the common direct drive line, and the direct power source switch is provided on this common direct drive line. Therefore, a circuit can be configured in which the direct power source switch is in the off state and the normal drive switch and the direct drive switch corresponding to one blade are in the on state, while the normal drive switch corresponding to another blade is in the off state, and the direct drive switch corresponding to this blade is in the on state. Thus, the motor controller corresponding to one blade can control the electric motor for changing the pitch angle of another blade. Consequently, in the windmill pitch control device in which the feathering can be performed with the electricity of the direct power source at the time of a loss of the electricity supply capability of the main power source, even if an abnormality has occurred in any of the motor controllers, it is possible to continue the pitch control with another normal motor controller, and thus to continue to generate electricity.

A windmill pitch control device according to a fifth aspect of the present invention is the windmill pitch control device of the fourth aspect, wherein each of the normal drive lines is provided with an independent drive switch between the normal drive switches and the electric motors, the independent drive switch being able to switch between a state where the normal drive switches and the electric motors are connected to each other and a state where they are disconnected from each other, the direct drive lines are connected to the respective normal drive lines between the normal drive switches and the independent drive switches, each of the pitch angle detectors is connected to all of the motor controllers so as to be able to transmit a detection result signal thereto, and if an abnormality has occurred in any of the motor controllers, the pitch control for the blade corresponding to an abnormal controller that is the motor controller in which the abnormality has occurred and the pitch control for the blade corresponding to a normal controller that is the motor controller which is normal and different from the abnormal controller are independently performed by the normal controller as a result of the independent drive switch corresponding to the normal controller and the independent drive switch corresponding to the abnormal controller being switched.

. According to the fifth aspect of the present invention, the result of detection by the pitch angle detector corresponding to each blade is transmitted to all of the motor controllers, and the independent drive switch is provided between the electric motor and both a point of the direct drive line located on the normal drive line and the normal drive switch. If an abnormality has occurred in any of the motor controllers, the pitch control for the blade corresponding to the normal controller, which is different from the abnormal controller, and the pitch control for the blade corresponding to the abnormal controller are independently performed by the normal controller, as a result of the independent drive switch being switched. Consequently, in the windmill pitch control device capable of performing feathering with the electricity of the direct power source at the time of a loss of the electricity supply capability of the main power source, even if an abnormality has occurred in any of the motor controllers, it is possible to continue independent pitch control for each blade with another normal motor controller, and thus to continue to generate electricity.

A windmill pitch control device according to a sixth aspect of the present invention is the windmill pitch control device of any one of the first to fifth aspects, wherein a plurality of the electricity accumulators are provided in one-to-one correspondence to a plurality of the motor controllers, a plurality of main power source lines connected to the respective motor controllers are provided so as to supply electricity from the main power source thereto, the main power source lines are connected to the same main power source via a common main power source line provided to be shared by the main power source lines, and the common main power source line is provided with a main power source switch capable of switching between a state where the main power source and the main power source lines are connected to each other and a state where they are disconnected from each other.

According to the sixth aspect of the present invention, the electricity accumulator and the main power source line that supplies electricity from the main power source are provided so as to correspond to each motor controller. The main power source lines are connected to the same main power source via the common main power source line, and the main power source switch is provided on this common main power source line. Therefore, while the main power source switch is in the off state, electricity can be supplied from the electricity accumulator corresponding to one motor controller to the electricity accumulator corresponding to another motor controller via the main power source lines and the common main power source line (or only via both main power source lines if the electricity accumulator can be connected without via the common main power source line). Accordingly, even if the remaining power of the electricity accumulator corresponding to any of the motor controller has become low, this electricity accumulator can be supplemented by the power of the electricity accumulator corresponding to another motor controller. Furthermore, even if the remaining power of the electricity accumulator corresponding to any of the motor controllers has become low, this electricity accumulator can be supplemented by the power of another electricity accumulator, and it is therefore possible to maintain independent pitch control for each blade.

A windmill pitch control device according to a seventh aspect of the present invention is the windmill pitch control device of any one of the first to sixth aspects, wherein an electricity accumulator remaining power detector that detects a remaining power of the electricity accumulator is provided as the electricity accumulator operation monitoring portion, and if the remaining power detected by the electricity accumulator remaining power detector is smaller than or equal to a predetermined value while the motor controller is continuing the pitch control with the electricity supplied from the electricity accumulator, the pitch angle of the blade is controlled such that the pitch angle is changed in a direction in which the wind pressure exerted on the blade is reduced.

The electricity
accumulator remaining power detector is provided as the electricity accumulator operation monitoring portion, and feathering is performed if the remaining power detected by the electricity accumulator remaining power detector is smaller than or equal to the predetermined value while the pitch control is being continued with the electricity of the electricity accumulator. Therefore, a configuration can be readily implemented in which feathering is performed before feathering becomes impossible due to a lack of the power of the electricity accumulator.

### Effects of the Invention

According to the present invention, it is possible to provide a windmill pitch control device capable of performing feathering, and continuing to generate electricity even at the time of a loss of the electricity supply capability of the main power source.

### Brief Description of the Drawings

FIG.1 is a perspective view of a windmill to which a windmill pitch control device according to a first embodiment of the present invention is applied.
FIG. 2 is an enlarged cross-sectional view of a portion of the windmill shown in FIG. 1 where a blade is attached to a hub.
FIG. 3 is a block diagram showing a windmill pitch control device according to the first embodiment of the present invention.
FIG. 4 is a block diagram showing a motor controller in the pitch control device shown in FIG. 3 and a pitch controller that is superordinate thereto.
FIG. 5 is a block diagram showing a windmill pitch control device according to a second embodiment of the present invention.

### Description of Embodiments

Hereinafter, embodiments of the present invention will be described with reference to the drawings. The embodiments of the present invention can be widely applied to windmill pitch control devices that include an electricity accumulator capable of applying electricity to an electric motor coupled to a pitch drive device for changing the pitch angle of blades of a windmill that are provided rotatably on a main shaft portion of the windmill, and that is able to control the pitch angle of the blades with the electricity of the electricity accumulator such that the pitch angle is changed in a direction in which the wind pressure exerted on the blades is reduced.

### First Embodiment

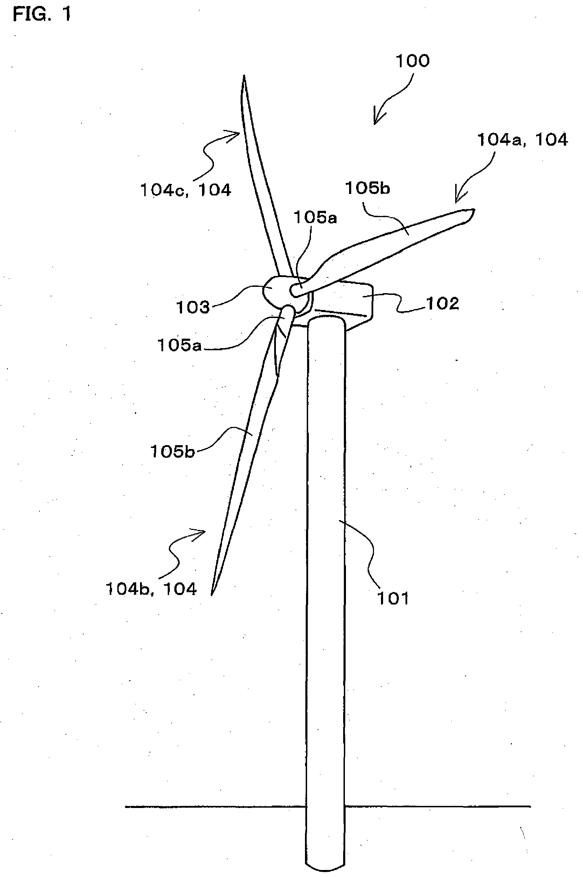

FIG. 1 is a perspective view of a windmill 100 to which a windmill pitch control device 1 (hereinafter, also referred to simply as a "pitch control device 1") according to a first embodiment of the present invention is applied. As shown in FIG. 1, the windmill 100 includes a tower 101, a nacelle 102, a hub (main shaft portion) 103, blades 104, and so on. The tower 101 is installed, extending vertically upward from the ground. The nacelle 102 is rotatably disposed on the tower 101 so as to be turned around in a horizontal plane by a yaw drive device (not shown). A power transmission shaft, an electricity generator, and so on, which are not shown in the drawings, are disposed inside the nacelle 102. The hub 103, which constitutes the main shaft portion in the present embodiment, is coupled to the aforementioned power transmission shaft and is rotatably provided on the nacelle 102. A plurality of (in the present embodiment, three) blades 104 (104a, 104b, 104c) are attached to the hub 103, extending radially at equal angle intervals. Each blade 104 (104a, 104b, 104c) is constituted by a hollow cylindrical shaft portion 105a that is attached to the hub 103, and a blade portion 105b for receiving wind.

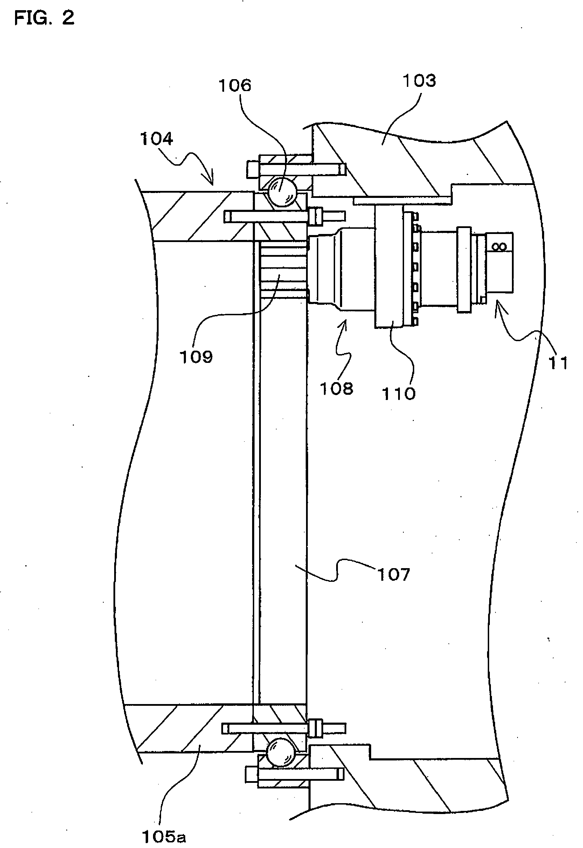

FIG. 2 is an enlarged cross-sectional view showing a portion where each blade 104 is attached to the hub 103, together with a pitch drive device 108 and an induction motor 11 serving as a motor for driving the pitch drive device 108. The hub 103 has openings formed in portions to which the blades 104 are attached, and the blades 104 are disposed so as to face those openings at the ends of their shaft portions 105a. Each blade 104 is supported at its shaft portion 105a on the hub 104 via a bearing 106, and is rotatably provided on the hub 103. A ring gear 107 having internal teeth disposed on its inner circumferential side is provided at the end of the shaft portion 105a on the side attached to the hub 103 (in FIG. 2, the internal teeth of the ring gear 107 are not shown). The ring gear 107 is disposed such that its shaft center coincides with the shaft center of the shaft portion 105a, and is configured so as to mesh with an output pinion 109 of the pitch drive device 108, which is configured as a speed reducer.

Three pitch drive devices 108 are provided, respectively corresponding to the three blades 104 (104a, 104b, 104c), and each pitch drive device 108 is attached via a bracket 110 to the inside of an opening portion of the hub 103 to which the blade 104 is attached. The pitch drive devices 108 are each coupled to the induction motor 11, reduce the speed of the driving force input from the induction motor 11 and output the driving force to the pinion 109, thereby causing the blade 104 to rotate about its shaft center with respect to the hub 103, together with the ring gear 107 that meshes with the pinion 109. The pitch drive devices 108 are thereby configured to change the pitch angle of the blades 104 (104a, 104b, 104c).

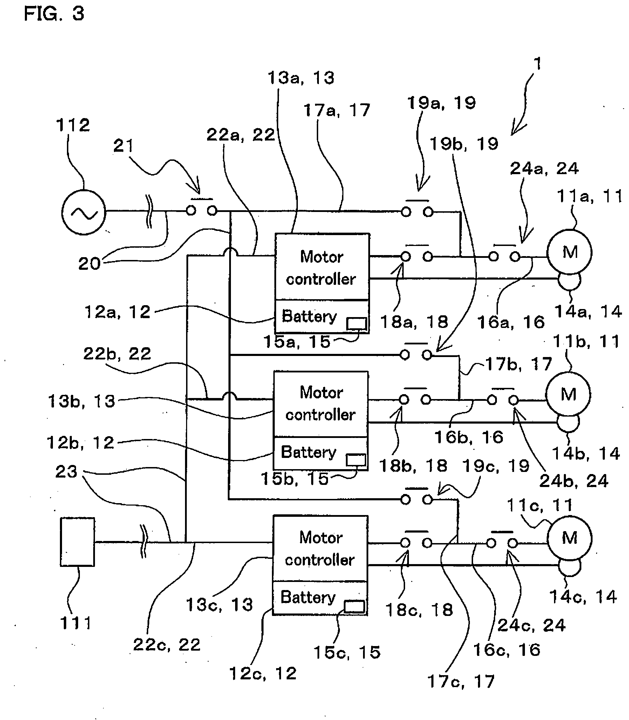

Next, the pitch control device 1 according to the first embodiment of the present invention will be described. FIG. 3 is a block diagram showing the pitch control device 1. The pitch control device 1 shown in FIG. 3 is disposed inside the hub 103, for example. The pitch control device 1 includes a plurality of (in this embodiment, three) induction motors 11 (11a, 11b, 11c), a plurality of (in this embodiment, three) batteries 12 (12a, 12b, 12c), a plurality of (in this embodiment, three) motor controllers 13 (13a, 13b, 13c), a plurality of (in this embodiment, three) encoders 14 (14a, 14b, 14c), a plurality of (in this embodiment, three) battery remaining power detectors 15 (15a, 15b, 15c), and so on. In addition to the aforementioned components, the pitch control device 1 includes, as lines (wires) and switches for the electricity supply system, a plurality of (in this embodiment, three) normal drive lines 16 (16a, 16b, 16c), a plurality of (in this embodiment, three) direct drive lines 17 (17a, 17b, 17c), a plurality of (in this embodiment, three) normal drive switches 18 (18a, 18b, 18c), a plurality of (in this embodiment, three) direct drive switches (19a, 19b, 19c), a common direct drive line 20, a direct power source switch 21, a plurality of (in this embodiment, three) main power source lines 22 (22a, 22b, 22c), a common main power source line 23, a plurality of (in this embodiment, three) independent drive switches 24 (24a, 24b, 24c), and so on.

Each of the three induction motors 11 (11a, 11b, 11c) constitutes an electric motor in the present embodiment that is coupled to the pitch drive device 108 for changing the pitch angle of each of the three blades 104 (104a, 104b, 104c). The induction motors 11 are installed so as to be able to output the driving force for changing the pitch angle of the blades 104. Note that the induction motor 11a is provided so as to correspond to the blade 104a, the induction motor 11b is provided so as to correspond to the blade 104b, and the induction motor 11c is provided so as to correspond to the blade 104c.

The three batteries 12 (12a, 12b, 12c) are provided so as to be able to apply electricity to,the respective induction motors 11 (11a, 11b, 11c) via the motor controllers 13, which will be described later. In other words, the battery 12a, the battery 12b, and the battery 12c are configured to be able to apply electricity to the induction motor 11a, the induction motor 11b, and the induction motor 11c, respectively. The batteries 12 (12a,12b,12c) are provided so as to correspond to the respective motor controllers 13 (13a,13b, 13c). The electricity from a main power source 111 is supplied to the batteries 12 (12a,12b, 12c) respectively via the common main power source line 23, the main power source lines 22 (22a, 22b, 22c), and the motor controllers 13 (13a, 13b, 13c) that will be described later, and electricity is thereby stored in the batteries 12 (12a, 12b, 12c). Each battery 12 (12a, 12b, 12c) constitutes an electricity accumulator in the present embodiment. Although the present embodiment will be described, taking, as an example, a configuration in which the batteries 12 (12a, 12b, 12c) are provided as the electricity accumulators, a configuration in which electricity accumulators in the form other than the batteries are provided may alternatively employed. For example, a configuration in which a condenser or a capacitor such as an EDLC (Electric double-layer capacitor) is used as the electricity accumulator may also be employed.

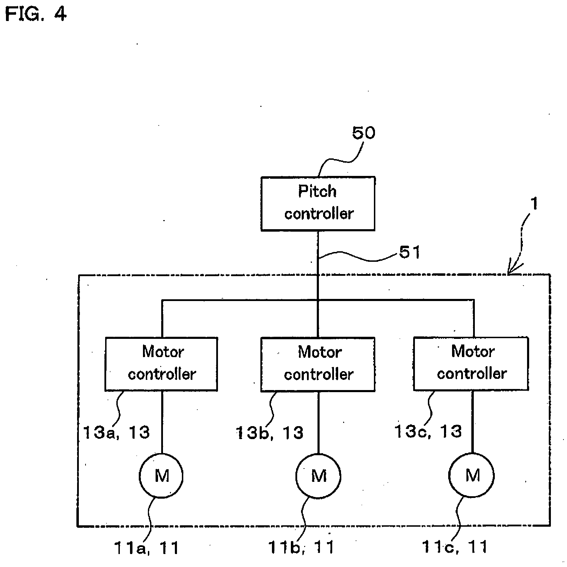

Here, a description will be given of a pitch controller 50 that transmits a control signal to the motor controllers 13 (13a, 13b,13c), which will be described later. FIG. 4 is a block diagram showing the motor controllers 13 (13a, 13b, 13c) and the pitch controller 50, which is a computer superordinate thereto. In FIG. 4, components of the pitch control device 1 other than the motor controllers 13 and the induction motors 11 are omitted. The pitch controller 50 shown in FIG. 4 includes a CPU (Central Processing Unit), a memory, and so on, which are not shown in FIG. 4, and is configured to be able to communicate with the motor controllers 13 (13a, 13b, 13c) via a communication line 51. The pitch controller 50 determines the target pitch angle of the blades 104 (104a, 104b, 104c) such that rotation is properly performed in accordance with the wind pressure exerted on the blades 104, based on a result of a wind pressure detection performed by a wind pressure sensor (not shown). Based on the target pitch angle, the pitch controller 50 transmits a control signal for pitch control for changing the pitch angle of the blades 104 to the motor controllers 13 (13a, 13b, 13c) via the communication line 51.

As mentioned above, the three motor controls 13 (13a, 13b, 13c) shown in FIGS. 3 and 4 are provided, and installed so as to correspond to the respective induction motors 11 (i.e., so as to correspond to the respective blades 104). In other words, the motor controller 13a is provided so as to correspond to the blade 104a and the induction motor 11a, the motor controller 13b is provided so as to correspond to the blade 104b and the induction motor 11b, and the motor controller 13c is provided so as to correspond to the blade 104c and the induction motor 11c. Each motor controller 13 (13a, 13b, 13c) includes a CPU (Central Processing Unit), an interface circuit, a power module portion that controls electricity supplied to the induction motor 11, a memory, and so on, which are not shown in the drawings. The motor controllers 13 are connected via the communication line 51 to the pitch controller 50 so as to be able to communicate therewith, and are also connected to the induction motors 11 and the batteries 12 so as to be able to communicate therewith.

Further, the motor controllers 13 are configured to be connected to the main power source 111, which is an external power source for supplying electricity during normal operation that is a state where no power failure, or no equipment fault or abnormality in the electricity supply system is occurring, and thus electricity is supplied to the motor controllers 13. In each motor controller 13, the power module portion, for example, is configured as an inverter circuit that controls electricity supplied to the induction motors 11 and rotation of the induction motors 11 by converting direct-current power supplied from the main power source 111 to alternating-current power. In the present embodiment, the main power source 111 is configured as, for example the electricity supply system that supplies direct-current power that is electricity from an external alternating-current power source rectified by a rectifier (not shown) into direct-current power. The external alternating-current power source that supplies the electricity to the main power source 111 via the rectifier may be, for example, a direct power source 112, which will be described later, or may be an external alternating-current power source constituted independently from the direct power source 112.

Further, the motor controllers 13 are configured to control storage of electricity from the main power source 111 in the batteries 12 and discharge of electricity stored in the batteries 12 to the induction motors 11. That is, the motor controller 13a controls storage and discharge of electricity in and from the battery 12a, the motor controller 13b controls storage and discharge of electricity in and from the battery 12b, and the motor controller 13c controls storage and discharge of electricity in and from the battery 12c. Further, the motor controllers 13 receive the above-mentioned control signal transmitted from the pitch controller 13 via the communication line 51, and control the operation of the induction motors 11 based on the control signal. In other words, based on the control signal from the pitch controller 13, the motor controller 13a controls the induction motor 11a, the motor controller 13b controls the induction motor 11b, and the motor controller 13c controls the induction motor 11c.

In addition, at the time of a loss of the electricity supply capability of the main power source 111 due to occurrence of power failure, equipment fault, or the like, the motor controllers 13 are configured to continue the pitch control for the blades 104 by controlling the induction motors 11 with the electricity supplied from the batteries 12, based on the control signal from the pitch controller 13. Further, the motor controllers 13 are also configured to be able to control the pitch angle of the blades 104 with the electricity of the batteries 12 such that the pitch angle is changed in a direction in which the wind pressure exerted on the blades 104 is reduced, based on a result of detection by the battery remaining power detectors 15, which will be described later. In other words, the motor controllers 13 are configured so as to be able to rotate the induction motors 11 with the electricity of the batteries 12 such that feathering is performed for changing the pitch angle in a direction in which the wind pressure exerted on the blades 104 is reduced. Note that if the aforementioned rotational operation of the induction motors 11 is performed under the control of the motor controllers 13, each induction motor 11 is stopped at a predetermined rotational angle position (feather position) that brings about a feathering state. In the state where feathering has been performed (the state where each induction motor 11 has been stopped at the feather position), the pitch angle of the blade 104 is fixed in a state where the blade surface of the blade portion 105b of each blade 104 is parallel to the wind direction such that substantially no wind pressure is exerted on the blade 104.

Note that in the motor controllers 13, receipt of the control signal from the pitch controller 50 and transmission of a command signal to the induction motors 11 and the batteries 12 are performed via the interface circuits. The memories in the motor controllers 13 store a program for performing processing of the motor controllers 13 for controlling storage and discharge of electricity in and from the batteries 12 and the operation of the induction motors 11, and the program is read and executed by the CPU.

As mentioned above, the three encoders 14 (14a,14b, 14c) shown in FIG. 3 are provided so as to correspond to the respective induction motors 11 (i.e., so as to correspond to the respective blades 14), and are configured to be able to detect the rotation number of the induction motors 11 (and so as to be able to also detect the rotational angle and the rotational speed of the induction motors 11). In other words, the encoder 14a is provided so as to detect the rotation number of the induction motor 11a for driving the blade 104a, the encoder 14b is provided so as to detect the rotation number of the induction motor 11b for driving the blade 104b, and the encoder 14c is provided so as to detect the rotation number of the induction motor 11c for driving the blade 104c.

Further, each encoder 14 (14a, 14b, 14c) constitutes a pitch angle detector in the present embodiment that detects the pitch angle of the blade 104 (104a, 104b, 104c) based on a result of detection of the rotation number of the induction motor 11. When the aforementioned feathering is performed, each induction motor 11 is stopped at the predetermined rotational angle position (feather position) that brings about the feathering state, based on the result of detection by the encoder 14 serving as the pitch angle detector. Although the present embodiment has been described, taking, as an example, a configuration in which the pitch angle detector is configured as the encoder 14, this need not be the case. For example, the pitch angle detector may be configured as a limit switch that is disposed at a feather position and detects the pitch angle that brings about this feather position is also possible. Another configuration is also possible in which the pitch angle detector is configured as a gear unit that is disposed in the vicinity of the shaft portion 105a of each blade 104 and is meshed with a gear formed on the shaft portion 105a to detect the pitch angle that brings about the feather position.

The three battery remaining power detectors 15 (15a, 15b, 15c) shown in FIG. 3 are provided, as mentioned above, and are installed in the respective batteries 12. Each battery remaining power detector 15 is configured as a detector that detects a remaining power of the battery 12. In other words, the battery remaining power detector 15a is installed in the battery 12a and detects the remaining power therein, the battery remaining power detector 15b is installed in the battery 12b and detects the remaining power therein, and the battery remaining power detector 15c is installed in the battery 12c and detects the remaining power therein. Furthermore, each battery remaining power detector 15 (15a, 15b, 15c) constitutes an electricity accumulator operation monitoring portion in the present embodiment that monitors an operational state of the battery 12 by detecting the remaining power of the battery 12. Furthermore, each battery remaining power detector 15 (15a, 15b, 15c) also constitutes an electricity accumulator remaining power detector in the present embodiment. Note that in the configuration in which a condenser or a capacitor is provided as the electricity accumulator, a condenser remaining power detector or a capacitor remaining power detector is provided as the electricity accumulator operation monitoring portion and the electricity accumulator remaining power detector.

In the pitch control device 1, control for changing the pitch angel of the blades 104 in a direction in which the wind pressure is reduced is performed to perform feathering, based on a result of monitoring by the electricity accumulator operation monitoring portion, that is, a result of detection by the battery remaining power detectors 15. The pitch control device 1 is configured such that this feathering control is performed when the remaining power detected by any of the battery remaining power detector 15 is smaller than or equal to a predetermined value, while the motor controllers 13 are continuing the pitch control with the electricity supplied from the batteries 12 at the time of a loss of the electricity supply capability of the main power source 111. In other words, feathering control is performed by the motor controllers 13 controlling the induction motors 11 based on the result of detection by the battery remaining power detectors 15.

The three normal drive lines 16 (16a, 16b, 16c) shown in FIG. 3 are provided, as mentioned above, so as to correspond to the respective induction motors 11 (i.e., so as to correspond to the respective blades 104). The normal drive line 16a is provided as an electricity supply line that connects the motor controller 13a to the induction motor 11a and is able to supply electricity to the induction motor 11a during normal operation. The normal drive line 16b is provided as an electricity supply line that connects the motor controller 13b to the induction motor 11b and is able to supply electricity to the induction motor 11b during normal operation. The normal drive line 16c is provided as an electricity supply line that connects the motor controller 13c to the induction motor 11c and is able to supply electricity to the induction motor 11c during normal operation.

The three direct drive lines 17 (17a, 17b, 17c) shown in FIG. 3 are provided, as mentioned above, so as to correspond to the respective induction motors 11 (i.e., so as to correspond to the respective blades 104). The direct drive line 17a is provided as an electricity supply line that connects the induction motor 11a to the direct power source 112, which is provided as an external alternating-current power source different from the main power source 111, via the normal drive line 16a, and that is able to supply alternating-current power from the direct-current power source 112 to the induction motor 11a to drive the induction motor 11a. The direct drive line 17b is provided as an electricity supply line that connects the direct power source 112 to the induction motor 11b via the normal drive line 16b, and is able to supply the alternating-current power from the direct power source 112 to the induction motor 11b to drive the induction motor 11b. The direct drive line 17c is provided as an electricity supply line that connects the direct power source 112 to the induction motor 11c via the normal drive line 16c, and is able to supply the alternating-current power from the direct power source 112 to the induction motor 11c to drive the induction motor 11c.

The three normal drive switches 18 (18a, 18b, 18c) shown in FIG. 3 are provided, as mentioned above, so as to correspond to the respective normal drive lines 16 (i.e., so as to correspond to the respective blades 104). The normal drive switch 18a is provided as a switch on the normal drive line 16a that is able to switch between a state where the motor controller 13a and the induction motor 11a are connected to each other and a state where they are disconnected from each other. The normal drive switch 18b is provided as a switch on the normal drive line 16b that is able to switch between a state where the motor controller 13b and the induction motor 11b are connected to each other and a state where they are disconnected from each other. The normal drive switch 18c is provided as a switch on the normal drive line 16c that is able to switch between a state where the motor controller 13c and the induction motor 11c are connected to each other and a state where they are disconnected from each other. Note that these normal drive switches 18 (18a, 18b, 18c) are configured to be able to switch between the connected state (on state) and the disconnected state (off state) based on a command signal from any of the motor controllers 13 (13a, 13b, 13c), for example.

The three direct drive switches 19 (19a, 19b, 19c) shown in FIG. 3 are provided as mentioned above, so as to correspond to the respective direct drive lines 17 (i.e., so as to correspond to the respective blades 104). The direct drive switch 19a is provided as a switch on the direct drive line 17a that is able to switch between a state where the direct power source 112 and the induction motor 11a are connected to each other and a state where they are disconnected from each other. The direct drive switch 19b is provided as a switch on the direct drive line 17b that is able to switch between a state where the direct power source 112 and the induction motor 11b are connected from each other and a state where they are disconnected from each other. The direct drive switch 19c is provided as a switch on the direct drive line 17c that is able to switch between a state where the direct power source 112 and the induction motor 11c are connected to each other and a state where they are disconnected from each other. Note that these direct drive switches 19 (19a, 19b, 19c) are configured to be able to switch between the connected state (on state) and the disconnected state (off state) based on a command signal from any of the motor controllers 13 (13a, 13b, 13c), for example.

The common direct drive line 20 shown in FIG. 3 is provided as an electricity supply line that connects the direct power source 112 to the direct drive lines 17 (17a, 17b, 17c). Thus the direct drive lines 17 (17a, 17b, 17c) are configured to be connected to the same direct power source 112 via the common direct drive line 20 that is provided to be shared by the direct drive lines 17. Further, the common direct drive line 20 is provided with the direct power source switch 21. The direct power source switch 21 is configured as a switch capable of switching between a state where the direct power source 112 and the direct drive lines 17 (17a, 17b, 17c) are connected to each other and a state where they are disconnected from each other. Note that the direct power source switch 21 is configured to be able to switch between the connected state (on state) and the disconnected state (off state), based on a command signal from at least any of the motor controllers 13, for example.

The three main power source lines 22 (22a, 22b, 22c) shown in FIG. 3 are provided, as mentioned above, as electricity supply lines that are connected to the respective motor controllers 13 so as to supply electricity from the main power source 111 to the motor controllers 13 (13a, 13b, 13c). In other words, the main power source line 22a is configured to be connected to the motor controller 13a and supply electricity thereto. The main power source line 22b is configured to be connected to the motor controller 13b and supply electricity thereto. The main power source line 22c is configured to be connected to the motor controller 13c and supply electricity thereto.

The common main power source line 23 shown in FIG. 3 is provided as an electricity supply line that connects the main power source 111 to the main power source lines 22 (22a, 22b, 22c). Thus the main power source lines 22 (22a, 22b, 22c) are configured to be connected to the same main power source 111 via the common main power source line 23 that is provided to be shared by the main power source lines 22.

The three independent drive switches 24 (24a, 24b, 24c) shown in FIG. 3 are provided, as mentioned above, on the respective normal drive lines 16 (16a, 16b, 16c). The independent drive switch 24a is provided as a switch on the normal drive line 16a between the normal drive switch 18a and the induction motor 11a that is able to switch between a state where the normal drive switch 18a and the induction motor 11a are connected to each other and a state where they are disconnected from each other. The direct drive line 17a is connected to the normal drive line 16a between the normal drive switch 18a and the independent drive switch 24a. The independent drive switch 24b is provided as a switch on the normal drive line 16b between the normal drive switch 18b and the induction motor 11b that is able to switch between a state where the normal drive switch 18b and the induction motor 11b are connected to each other and a state where they are disconnected from each other. The direct drive line 17b is connected to the normal drive line 16b between the normal drive switch 18b and the independent drive switch 24b. The independent drive switch 24c is provided as a switch on the normal drive line 16c between the normal drive switch 18c and the induction motor 11c that is able to switch between a state where the normal drive switch 18c and the induction motor 11c are connected to each other and a state where they are disconnected from each other. The direct drive line 17c is connected to the normal drive line 16c between the normal drive switch 18c and the independent drive switch 24c. Note that these independent drive switches 24 (24a, 24b, 24c) are configured to be able to switch between the connected state (on state) and the disconnected state (off state) based on a command signal from any of the motor controllers 13 (13a, 13b, 13c), for example.

Next, the operation of the aforementioned pitch control device 1 will be described. During normal operation in which no power failure or no equipment fault or abnormality is occurring in the main power source 111, the direct power source switch 21 is turned off, and the normal drive switches 18 and the independent drive switches 24 are in the on state. Electricity from the main power source 111 is supplied to the induction motors 11 via the common main power source line 23, the main power source lines 22, the motor controllers 13, and the normal drive lines 16. Further, the motor controllers 13 control the induction motors 13 with electricity supplied from the main power source 111 based on a control signal from the pitch controller 50, and the pitch drive devices 108 are thereby driven. Thus the pitch control for the blades 104 is performed by the pitch control device 1 such that the pitch angle is appropriate for the wind pressure exerted on the blades 104.

On the other hand, if power failure, or equipment fault or abnormality has occurred in the main power source 111 and a loss of the electricity supply capability of the main power source 111 has occurred accordingly, electricity of the batteries 12 is supplied to the induction motors 11 via the motor controllers 13 and the normal drive lines 16. Then, the motor controllers 13 control the induction motors 11 with electricity supplied from the batteries 12 to continue the pitch control, based on a control signal from the pitch controller 50. Therefore, with the pitch control device 1, it is possible to continue to generate electricity even at the time of a loss of the electricity supply capability of the main power source 111.

Feathering is performed if it is detected by any of the battery remaining power detectors 15 that the remaining power is smaller than or equal to a predetermined value while the pitch control is being continued with the electricity from the batteries 12 due to occurrence of a loss of the electricity supply capability of the main power source 111. In other word, based on a result of monitoring by the battery remaining power detectors 15 each serving as the electricity accumulator operation monitoring portion, the motor controllers 13 control the induction motors 11 with the electricity supplied from the batteries 12, and feathering is performed for changing the pitch angle in a direction in which the wind pressure exerted on the blades 104 is reduced. Thus, the windmill 100 is prevented from being damaged due to an abnormal increase in the rotational speed of the blades 104 and the hub 103. Furthermore, with the pitch control device 1, feathering is performed if it is detected by the battery remaining power detectors 15 that the remaining power is smaller than or equal to a predetermined value. Therefore, it is possible to readily implement the configuration in which feathering is performed before feathering becomes impossible due to a lack of the electricity of the batteries 12.

Furthermore, with the pitch control device 1, feathering is performed with the electricity of the direct power source 112 if it is detected that the remaining power detected by the battery remaining power detectors 15 rapidly or suddenly becomes smaller than or equal to a predetermined lower limit value, which is further smaller than the aforementioned predetermined value, while the pitch control is being continued with the electricity from the batteries 12 due to occurrence of a loss of the electricity supply capability of the main power source 111. In other words, feathering is performed not with the electricity of the batteries 12 but with the electricity of the direct power source 112 if the capability of the batteries 12 has degraded or an abnormality has occurred in the batteries 12, causing the remaining power to rapidly or suddenly fall below a remaining power state in which feathering can be performed with the electricity of the batteries 12. In this case, based on a command signal from the motor controllers 13, the normal drive switches 18 are turned to the off state, and then the direct power source switch 21 and the direct drive switches 19 are turned to the on state. Note that the on state of the independent drive switches 24 is maintained.

With the above-described configuration, feathering is performed for changing the pitch angle in a direction in which the wind pressure exerted on the blades 104 is reduced, with the electricity of the direct power source 112. It is possible to stop, at a predetermined position, the feathering operation for changing the pitch angle of the blades 104 to complete feathering, based on a result of detection by the encoders 14 each serving as the pitch angle detector. Accordingly, with the pitch control device 1, feathering can be performed also with the electricity of the direct power source 112. Therefore, it is possible to perform feathering even if the capability of the batteries 12 has degraded or an abnormality has occurred in the batteries 12 while the pitch control is being performed with the electricity of the batteries 12.

In the pitch control device 1, if an abnormality has occurred in any of the motor controllers 13, the pitch control is performed for the blade 104 corresponding to the abnormal controller that is the motor controller 13 in which the abnormality has occurred, by a normal controller that is the motor controller 13 which is normal and different from the abnormal controller. For example, if an abnormality has occurred in the motor controller 13a (abnormal controller) during normal operation, or while the pitch control is being performed with electricity of the batteries 12, the pitch control for the blade 104a is performed by the motor controller 13b or the motor controller 13c that is a normal controller. Similarly, if an abnormality has occurred in the motor controller 13b or 13c, the pitch control for the blade 104b or 104c is performed by one of the two motor controllers 13 other than the motor controller 13b or 13c in which the abnormality occurred. Further, if an abnormality has occurred in two motor controllers (e.g., 13a and 13b), the pitch controller for the blades (104a and 104b in this case) is performed by the remaining motor controller (e.g., 13c) that is a normal controller. Note that if the pitch control for the blade 104 corresponding to an abnormal controller is performed by a normal controller, the pitch control for the blade 104 corresponding to the normal controller is also performed simultaneously by the normal controller.

Here, the aforementioned case where the pitch control for the blade 104 corresponding to an abnormal controller is performed by a normal controller in the pitch control device 1 will be described in further detail. The following description will be given, taking, an example, the case where an abnormality has occurred in the motor controller 13a and the pitch control for the blade 104a is performed by the motor controller 13b. The same description is applied to other cases, which will not be described accordingly.

In the aforementioned case, first, the off state of the direct power source switch 21 is maintained, while the on state of the normal drive switch 18b corresponding to the motor controller 13b that is a normal controller and the blade 104b is maintained. The direct drive switch 19b is turned to the on state. Meanwhile, the normal drive switch 18a corresponding to the motor controller 13a that is an abnormal controller and the blade 104a is turned to the off state, and the direct drive switch 19a is turned to the on state. Note that the on state of the independent drive switches 24a and 24b is maintained. It is thereby possible to configure a circuit for supplying electricity supplied to the motor controller 13b to both the induction motors 14a and 14b via the normal drive line 16b, the normal drive switch 18b and the independent drive switch 24a, the direct drive line 17b and the direct drive switch 19b, the common direct drive line 20, the direct drive line 17a and the direct drive switch 19a, and the normal drive line 16a and the independent drive switch 24a.

As a result of the above configuration, with the motor controller 14b that is the normal controller corresponding to one blade 104b, it is possible to also control the induction motor 11a for changing the pitch angle of another blade 104a corresponding to the motor controller 13a, which is the abnormal controller. Consequently, in the pitch control device 1 capable of performing feathering with electricity of the direct power source 112 at the time of a loss of the electricity supply capability of the main power source 111, even if an abnormality has occurred in any of the motor controllers 13, it is possible to continue the pitch control with the other normal motor controllers 13, and thus to continue to generate electricity.

As described above, according to the present invention, it is possible to provide a windmill pitch control device 1 capable of performing feathering, and continuing to generate electricity even at the time of a loss of the electricity supply capability of the main power source 111.

### Second Embodiment

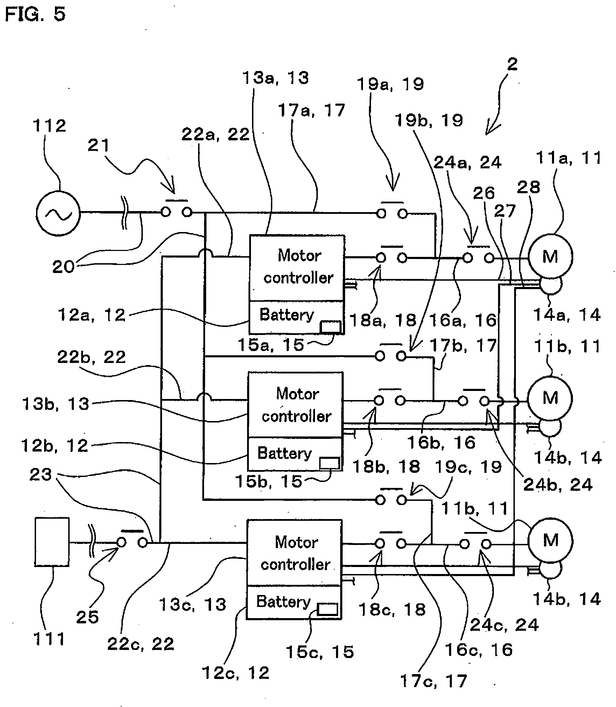

Next, a second embodiment of the present invention will be discussed. FIG. 5 is a block diagram showing a windmill pitch control device 2 (hereinafter, also referred to simply as a "pitch control device 2") according to the second embodiment. The pitch control device 2 shown in FIG. 5 is applied to the windmill 100, as with the pitch control device 1 in the first embodiment. The pitch control device 2 is configured similarly to the first embodiment, and has the same components as those of the pitch control device 1. However, the pitch control device 2 is different from the pitch control device 1 of the first embodiment on the point that it further has a main power source switch 25 and on a point concerning the configuration for transmitting a signal from the encoders 14 each serving as the pitch angle detector to the motor controllers 13. Hereinafter, the description of the same configuration as that in the first embodiment will be omitted by using, or citing, the same symbols in the drawings, and only the configuration different from that in the first embodiment will be described.

As shown in FIG. 5, the common main power source line 23 in the pitch control device 2 is provided with the main power source switch 25. The main power source switch 25 is configured as a switch capable of switching between a state where the main power source 111 and the main power source lines 22 (22a, 22b, 22c) are connected to each other and a state where they are disconnected from each other. For example, the direct power source switch 25 is configured to be able to switch between the connected state (on state) and the disconnected state (off state) based on a command signal from at least one of the motor controllers 13.

As shown in FIG. 5, in the pitch control device 2, each encoder (pitch angle detector) 14 is connected to all motor controllers 13 so as to be able to transmit a detection result signal to all those motor controllers 13. In other words, the encoder 14a is connected to the motor controller 13a via a pitch angle detection signal line 26 so as to be able to transmit a detection result signal to the motor controller 13a, is connected to the motor controller 13b via a pitch angle detection signal line 27 so as to be able to transmit a detection result signal to the motor controller 13b, and is connected to the motor controller 13c via a pitch angle detection signal line 28 so as to be able to transmit a detection result signal to the motor controller 13c. Although not shown in FIG. 5, similarly, each of the encoders 14b and 14c is connected to the motor controller 13a via the pitch angle detection signal line 26 (not shown) so as to be able to transmit a detection result signal to the motor controller 13a, is connected to the motor controller 13b via a pitch angle detection signal line 27 (not shown) so as to be able to transmit a detection result signal to the motor controller 13b, and is connected to the motor controller 13c via a pitch angle detection signal line 28 (not shown) so as to be able to transmit a detection result signal to the motor controller 13c.

Next, the operation of the aforementioned pitch control device 2 will be described. The pitch control device 2 operates similarly to the pitch control device 1 in the first embodiment during normal operation in which no power failure or no equipment fault or abnormality is occurring in the main power source 111. In other words, in this case, the motor controllers 13 control the induction motors 11 with electricity supplied from the main power source 111, based on a control signal from the pitch controller 50, and thus the pitch control for the blades 104 is performed.

The pitch control device 2 also operates similarly to the pitch control device 1 in the first embodiment if power failure, or equipment fault or abnormality has occurred in the main power source 111 and a loss of the electricity supply capability of the main power source 111 has occurred accordingly. In other words, in this case, the motor controllers 13 control the induction motors 11 with the electricity supplied from the batteries 12 to continue the pitch control, based on a control signal from the pitch controller 50. Thus, electricity generation is continued even at the time of a loss of the electricity supply capability of the main power source 111.

Further, if, in the pitch control device 2, it is detected by any of the battery remaining power detectors 15 that the remaining power is smaller than or equal to a predetermined value while the pitch control is being continued with the electricity from the batteries 12 due to occurrence of a loss of the electricity supply capability of the main power source 111, feathering is performed as in the first embodiment. Thus, the windmill 100 is prevented from being damaged due to an abnormal increase in the rotational speed of the blades 104 and the hub 103. Moreover, feathering can be performed before feathering becomes impossible due to a lack of the electricity of the batteries 12.

In the pitch control device 2, feathering is performed as in the first embodiment if the capability of the batteries 12 has degraded or an abnormality of the batteries 12 has occurred such that the remaining power therein rapidly or suddenly falls below a remaining power state in which feathering can be performed with the electricity of the batteries 12 while the pitch control is being continued with the electricity from the batteries 12 due to occurrence of a loss of the electricity supply capability of the main power source 111. In other words, as in the first embodiment, predetermined switches (18, 19, 21) are switched, and feathering is performed not with electricity of the batteries 12 but with electricity of the direct power source 112. Therefore, it is possible to perform feathering even if the capability of the batteries 12 has degraded or an abnormality of the batteries 12 has occurred while the pitch control is being performed with the electricity of the batteries 12.

Accordingly, according to the present embodiment, it is possible to provide the windmill pitch control device 2 capable of performing feathering, and of continuing to generate electricity even at the time of a loss of the electricity supply capability of the main power source 111, as in the first embodiment.

Meanwhile, unlike the pitch control device 1 in the first embodiment, the common main power source line 23 in the pitch control device 2 is provided with the main power source switch 25. Therefore, even if the remaining power of a battery (any one of 12a, 12b, 12c) corresponding to any one of the motor controllers (13a, 13b, 13c) has become low while the pitch control is being continued with the electricity from the batteries 12 due to occurrence of a loss of the electricity supply capability of the main power source 111, it can be supplemented by the electricity of the batteries 12 corresponding to the other motor controllers 13.

For example, if the remaining power of the battery 12a corresponding to the motor controller 13a has become low, the main power source switch 25 is turned to the off state based on a command signal from the motor controller 13a. Thus, electricity can be supplied to the battery 12a corresponding to the motor controller 13a from the batteries (12b,12c) corresponding to the motor controllers (13b, 13c) via the main power source lines (22a, 22b, 22c) and the common main power source line 23. In other words, even if the remaining power of the battery 12a corresponding to the motor controller 13a has become low, it can be supplemented by the electricity of the batteries (12b, 12c) corresponding to the other motor controllers (13b, 13c).

Although the above description has been given, taking, as an example, the case where the remaining power of the battery 12a corresponding to the motor controller 13a has become low, the same applies to the case where the remaining power of the batteries (12b, 12c) corresponding to the motor controllers (13b, 13c) has become low. With the pitch control device 2, even if the remaining power of the battery 12 corresponding to any of the motor controllers 13 has become low, it can be supplemented by the electricity of the other batteries 12. Therefore, the independent pitch control for the blades 104 can be maintained.

Unlike the pitch control device 1 in the first embodiment, when, in the pitch control device 2, an abnormality occurred in any of the motor controllers 13, the pitch control is independently performed for the blades 104 by a normal controller that is the motor controller 13 which is normal and different from an abnormal controller that is the motor controller 13 in which the abnormality occurred. In other words, in the pitch control device 2, the result of detection by each of the encoders 14 corresponding to the respective blades 104 is transmitted to all motor controllers 13, and the independent drive switches 24 are provided between the electric motors 11 and both the points of the direct drive lines 17 located on the normal drive lines 16 and the normal drive switches 18. If an abnormality has occurred in any of the motor controllers 13, the pitch control for the blade 104 corresponding to the normal controller and the pitch control for the blade 104 corresponding to the abnormal controller are independently performed by the normal controller, as a result of the independent drive switch 24 corresponding to the normal controller and the independent drive switch 24 corresponding to the abnormal controller being switched.

A specific example of the aforementioned configuration will be described, taking, as an example, the case where an abnormality has occurred in the motor controller 13a during normal operation, or while the pitch control is being performed with electricity of the batteries 12, and the pitch control for the blade 104a is performed by the motor controller 13b.

In this case, first, the off state of the direct power source switch 21 is maintained, while the on state of the normal drive switch 18b corresponding to the motor controller 13b that is a normal controller and the blade 104b is maintained. Then, the direct drive switch 19b is turned to the on state. Meanwhile, the normal drive switch 18a corresponding to the motor controller 13a that is the abnormal controller and the blade 104a is turned to the off state, and the direct drive switch 19a is turned to the on state. Then, the on state and the off state of the independent drive switches 24a and 24b are alternately switched based on a command signal from the motor controller 13b. In other words, the on state and the off state of the independent drive switches 24a and 24b are alternately switched such that the independent drive switch 24b is set to the off state when the independent drive switch 24a is in the on state, and the independent drive switch 24b is set to the on state when the independent drive switch 24a is in the off state.

With the above configuration, electricity is supplied alternately to the induction motors 14a and 14b based on the control of the motor controller 13b that receives the detection result signal of the encoders (14a, 14b), and thus the pitch control for the respective blades (104a, 104b) is alternately performed. In other words, by the motor controller 13b that is the normal controller, the pitch control for the blade 104b corresponding to this motor controller 13b as well as the pitch control for the blade 104a corresponding to the motor controller 13a that is the abnormal controller are independently performed as a result of the independent drive switches (24a, 24b) being switched. Note that the pitch control for the respective blades 104 is independently performed, not only in the case described above as an example, but also in other cases. Accordingly, according to the present embodiment, even if an abnormality has occurred in any of the motor controllers 13 in the pitch control device 2 capable of performing feathering with electricity of the direct power source 112 at the time of a loss of the electricity supply capability of the main power source 111, the pitch control for the respective blades 104 can be independently continued to generate electricity, by the other normal motor controllers 13.

Although the embodiments of the present invention have been described thus far, the present invention is not limited to the embodiments described above, and various modifications may be made within the scope recited in the claims. For example, the following modifications can be made for implementation.
(1) Although the first and second embodiments have been described, taking, as an example, the configuration in which the electricity accumulator operation monitoring portion is configured as the electricity accumulator remaining power detector installed in the electricity accumulator, this need not be the case. In other words, the electricity accumulator operation monitoring portion may be provided in a casing that is separate from the electricity accumulator, or may be configured to monitor an operational state other than the remaining power of the electricity accumulator. Further, although the present embodiments have been described, taking, as an example, the configuration in which feathering is controlled based on a command signal from the motor controllers, this need not be the case. For example, a configuration is also possible in which a controller other than the motor controllers is further provided, and feathering is controlled by this controller.
(2) Although the first and second embodiments have been described, taking, as an example, the configuration in which the electricity accumulators are provided so as to correspond to the respective motor controllers, this need not be the case. A configuration in which the electricity accumulators are installed separately from the motor controllers is also possible, or a configuration in which the electricity accumulators are configured as a single unitary electricity accumulator is also possible.
(3) Although the first and second embodiments have been described, taking, as an example, the configuration in which the direct drive lines connect the direct power source to the electric motors via the normal drive lines, this need not be the case. A configuration in which the direct drive lines directly connect the direct power source to the electric motors is also possible.
(4) Although the first and second embodiments have been described, taking, as an example, a configuration in which the electric motors connected to the pitch drive devices are configured as the induction motors, this need not be the case. For example, a configuration in which the electric motors are configured as brush direct-current motors, brushless motors, synchronous motors, or the like is also possible. In this case, the configuration of the power module portions in the main power source, the direct power source; and the motor controllers will be changed in accordance with the configuration of the electric motors. Note that if direct-current motors are used as the electric motors, it is desired to consider problems such as a decrease in the maintainability of the electric motors, an increase in the outside diameter thereof, and a decrease in the responsiveness thereof. Further, if the brushless motors are used as the electric motors, it is desired to consider the problem in that an additional drive controller is necessary, while such electric motors have good maintainability.

### Industrial Applicability

The present invention can be widely applied to windmill pitch control devices that include an electricity accumulator capable of applying electricity to electric motors connected to a pitch drive device for changing the pitch angle of each blade of a windmill that is provided rotatably on a main shaft portion of the windmill, and that is able to control the pitch angle of the blade with electricity of the electricity accumulator such that the pitch angle is changed in a direction in which the wind pressure exerted on the blade is reduced.

### Descriptions of Reference Numerals

1 Windmill pitch control device
11, 11a, 11b, 11c Induction motor (electric motor)
12, 12a, 12b, 12c Battery (electricity accumulator)
13, 13a, 13b, 13c Motor controller
15, 15a, 15b, 15c Battery remaining power detector (electricity accumulator operation monitoring portion, electricity accumulator remaining power detector)
100 Windmill
103 Hub (main shaft portion)
104 Blade
108 Pitch drive device

## Claims

1. A windmill pitch control device (1, 2) that includes an electricity accumulator (12) capable of applying electricity to an electric motor (11) coupled to a pitch drive device (108) for changing a pitch angle of a blade (104) of a windmill (100) that is provided rotatably on a main shaft portion (103) of the windmill, and that is able to control the pitch angle of the blade (104) with the electricity of the electricity accumulator (12) such that the pitch angle is changed in a direction in which a wind pressure exerted on the blade (104) is reduced, the windmill pitch control device (1, 2) comprising:
a motor controller (13) configured to control storage and discharge of the electricity in and from the electricity accumulator (12), and to control the electric motor (11) based on a control signal for pitch control for changing the pitch angle of the blade (104) from a pitch controller (50) that transmits the control signal;
a battery remaining power detector (15) configured to detect a battery remaining power of the electricity accumulator (12); and
a pitch angle detector (14) configured to detect the pitch angle of the blade;
wherein the motor controller (13) is connected to a main power source (111) that is a power source for supplying electricity during normal operation such that the electricity is supplied to the motor controller (13), and at the time of a loss of an electricity supply capability of the main power source (111), the motor controller (13) controls the electric motor (11) with the electricity supplied from the electricity accumulator (12) and continues the pitch control, based on the control signal, and controls for changing the pitch angle of the blade (104) so as to perform a feathering control, when the remaining power detected by the battery remaining power detector (15) is smaller than or equal to a predetermined value while the pitch control being continuously performed with the electricity supplied from the electricity accumulator (12);
**characterised in that**, if the remaining power detected by the battery remaining power detector (15) becomes smaller than or equal to a predetermined lower limit which is further smaller than the predetermined value, while the pitch control is being continued with the electricity from the electricity accumulator (12), the feathering control is performed with a direct power source (112) which is different from the main power source (111) and is connected to the electric motor (11); and
wherein the feathering control is stopped at a predetermined position based on the result of detection by the pitch angle detector (14) to complete the feathering control operation.

2. The windmill pitch control device (1, 2) according to claim 1,
wherein a plurality of the motor controllers (13) are provided in one-to-one correspondence to a plurality of the blades (104) provided on the windmill (100), and
if an abnormality has occurred in any of the motor controllers (13), the pitch control for the blade (104) corresponding to an abnormal controller that is the motor controller (13) in which the abnormality has occurred is performed by a normal controller that is the motor controller (13) which is normal and different from the abnormal controller.

3. The windmill pitch control device (1, 2) according to claim 1,
wherein the electric motor (11) is provided as an induction motor, and
the windmill pitch control device (1, 2) further comprises:
a normal drive line (16) that connects the motor controller (13) to the electric motor (11), and is able to supply the electricity to the electric motor (11) during the normal operation;
a direct drive line (17) that connects directly, or via the normal drive line (16), the electric motor (11) to a direct power source (112) provided as an alternating-current power source which is different from the main power source (111), and that is able to supply the electricity from the direct power source (112) to the electric motor (11) and drive the electric motor (11);
a normal drive switch (18) that is provided on the normal drive line (16) and is able to switch between a state where the motor controller (13) and the electric motor (11) are connected to each other and a state where they are disconnected from each other; and
a direct drive switch (19) that is provided on the direct drive line (17) and is able to switch between a state where the direct power source (112) and the electric motor (11) are connected to each other and a state where they are disconnected from each other.

4. The windmill pitch control device (1, 2) according to claim 3,
wherein a plurality of the motor controllers (13), a plurality of the pitch angle detectors (14), a plurality of the direct drive lines (17), a plurality of the direct drive switches (19), a plurality of the normal drive lines (16), and a plurality of the normal drive switches (18) are provided in one-to-one correspondence to a plurality of the blades (104) provided on the windmill (100),
the direct drive lines (17) are connected to the same direct power source (112) via a common direct drive line (20) provided to be shared by the direct drive lines (17), and
the common direct drive line (20) is provided with a direct power source switch (21) capable of switching between a state where the direct power source (112) and the direct drive lines (17) are connected to each other and a state where they are disconnected from each other.

5. The windmill pitch control device (2) according to claim 4,
wherein each of the normal drive lines (16) is provided with an independent drive switch (24) between the normal drive switches (18) and the electric motors (11), the independent drive switch (24) being able to switch between a state where the normal drive switches (18) and the electric motors (11) are connected to each other and a state where they are disconnected from each other,
the direct drive lines (17) are connected to the respective normal drive lines (16) between the normal drive switches (18) and the independent drive switches (24),
each of the pitch angle detectors (14) is connected to all of the motor controllers (13) so as to be able to transmit a detection result signal thereto, and
if an abnormality has occurred in any of the motor controllers (13), the pitch control for the blade (104) corresponding to an abnormal controller that is the motor controller (13) in which the abnormality has occurred and the pitch control for the blade (104) corresponding to a normal controller that is the motor controller (13) which is normal and different from the abnormal controller are independently performed by the normal controller as a result of the independent drive switch (24) corresponding to the normal controller and the independent drive switch (24) corresponding to the abnormal controller being switched.

6. The windmill pitch control device (2) according to any one of claims 1 to 5,
wherein a plurality of the electricity accumulators (12) are provided in one-to-one correspondence to a plurality of the motor controllers (13),
a plurality of main power source lines (22) connected to the respective motor controllers (13) are provided so as to supply electricity from the main power source (111) thereto,
the main power source lines (22) are connected to the same main power source (111) via a common main power source line (23) provided to be shared by the main power source lines (22), and
the common main power source line (23) is provided with a main power source switch (25) capable of switching between a state where the main power source (111) and the main power source lines (22) are connected to each other and a state where they are disconnected from each other.

## Patentansprüche

1. Steuervorrichtung für den Anstellwinkel einer Windkraftanlage (1, 2), die einen Elektrizitätsakkumulator (12) umfasst, der in der Lage ist, Elektrizität in einen Elektromotor (11) einzuspeisen, der mit einer Anstellwinkelantriebsvorrichtung (108) gekoppelt ist, um einen Anstellwinkel eines Flügels (104) einer Windkraftanlage (100) zu ändern, der drehbar auf einem Hauptwellenabschnitt (103) der Windkraftanlage angeordnet ist, und die in der Lage ist, den Anstellwinkel des Flügels (104) mit der Elektrizität des Elektrizitätsakkumulators (12) dergestalt zu steuern, dass der Anstellwinkel in einer Richtung geändert wird, in der ein auf den Flügel (104) wirkender Winddruck verringert wird, wobei die Steuervorrichtung für den Anstellwinkel einer Windkraftanlage (1, 2) Folgendes umfasst:
eine Motorsteuereinheit (13), die dafür ausgebildet ist, das Speichern und Entladen der Elektrizität in dem bzw. aus dem Elektrizitätsakkumulator (12) zu steuern, und den Elektromotor (11) auf der Basis eines Steuersignals für die Anstellwinkelsteuerung zum Ändern des Anstellwinkels des Flügels (104) von einer Anstellwinkelsteuereinheit (50), die das Steuersignal sendet, zu steuern;
einen Batterie-Restladezustandsdetektor (15), der dafür ausgebildet ist, einen Batterie-Restladezustand des Elektrizitätsakkumulators (12) zu detektieren; und
einen Anstellwinkeldetektor (14), der dafür ausgebildet ist, den Anstellwinkel des Flügels zu detektieren;
wobei die Motorsteuereinheit (13) mit einer Hauptstromquelle (111) verbunden ist, die eine Stromquelle zum Zuführen von Elektrizität während des normalen Betriebes ist, dergestalt, dass die Elektrizität in die Motorsteuereinheit (13) eingespeist wird, und die Motorsteuereinheit (13) zu einer Zeit des Verlusts einer Elektrizitätsversorgungsfähigkeit der Hauptstromquelle (111) den Elektromotor (11) mit der Elektrizität steuert, die von dem Elektrizitätsakkumulator (12) zugeführt wird, und die Anstellwinkelsteuerung auf der Basis des Steuersignals fortsetzt, und das Ändern des Anstellwinkels des Flügels (104) so steuert, dass eine Blatteinstellung vorgenommen wird, wenn der durch den Batterie-Restladezustandsdetektor (15) detektierte Restladezustand nicht größer ist als ein vorgegebener Wert, während die Anstellwinkelsteuerung kontinuierlich mit der von dem Elektrizitätsakkumulator (12) zugeführten Elektrizität ausgeführt wird;
**dadurch gekennzeichnet, dass**, wenn der durch den Batterie-Restladezustandsdetektor (15) detektierte Restladezustand bis auf oder unter eine vorgegebene Untergrenze sinkt, die noch niedriger ist als der vorgegebene Wert, während die Anstellwinkelsteuerung mit der Elektrizität von dem Elektrizitätsakkumulator (12) fortgesetzt wird, die Blatteinstellung mit einer direkten Stromquelle (112) vorgenommen wird, die von der Hauptstromquelle (111) verschieden ist und mit dem Elektromotor (11) verbunden ist; und
wobei die Blatteinstellung an einer vorgegebenen Position auf der Basis des Ergebnisses der Detektion durch den Anstellwinkeldetektor (14) gestoppt wird, um den Blatteinstellungsvorgang zu vollenden.

2. Steuervorrichtung für den Anstellwinkel einer Windkraftanlage (1, 2) nach Anspruch 1,
wobei mehrere der Motorsteuereinheiten (13) in einer Eins-zu-eins-Entsprechung zu mehreren der Flügel (104), die an der Windkraftanlage (100) angeordnet sind, vorhanden sind, und
wenn eine Anomalie in einer der Motorsteuereinheiten (13) aufgetreten ist, die Anstellwinkelsteuerung für den Flügel (104), die einer fehlerhaften Steuereinheit entspricht, welche die Motorsteuereinheit (13) ist, in der die Anomalie aufgetreten ist, durch eine normale Steuereinheit ausgeführt wird, welche die Motorsteuereinheit (13) ist, die normal ist und eine andere als die fehlerhafte Steuereinheit ist.

3. Steuervorrichtung für den Anstellwinkel einer Windkraftanlage (1, 2) nach Anspruch 1,
wobei der Elektromotor (11) als ein Induktionsmotor ausgebildet ist, und
die Steuervorrichtung für den Anstellwinkel einer Windkraftanlage (1, 2) des Weiteren Folgendes umfasst:
eine Normalantriebsleitung (16), welche die Motorsteuereinheit (13) mit dem Elektromotor (11) verbindet und in der Lage ist, die Elektrizität zu dem Elektromotor (11) während des normalen Betriebes zuzuführen;
eine Direktantriebsleitung (17), die den Elektromotor (11) direkt, oder über die Normalantriebsleitung (16), mit einer direkten Stromquelle (112) verbindet, die als eine Wechselstromquelle ausgebildet ist, die von der Hauptstromquelle (111) verschieden ist, und die in der Lage ist, die Elektrizität von der direkten Stromquelle (112) in den Elektromotor (11) einzuspeisen und den Elektromotor (11) anzutreiben;
einen Normalantriebsschalter (18), der in der Normalantriebsleitung (16) angeordnet ist und in der Lage ist, zwischen einem Zustand, in dem die Motorsteuereinheit (13) und der Elektromotor (11) miteinander verbunden sind, und einem Zustand, in dem sie voneinander getrennt sind, umzuschalten; und
einen Direktantriebsschalter (19), der in der Direktantriebsleitung (17) angeordnet ist und in der Lage ist, zwischen einem Zustand, in dem die direkte Stromquelle (112) und der Elektromotor (11) miteinander verbunden sind, und einem Zustand, in dem sie voneinander getrennt sind, umzuschalten.

4. Steuervorrichtung für den Anstellwinkel einer Windkraftanlage (1, 2) nach Anspruch 3,
wobei mehreren der Motorsteuereinheiten (13), mehrere der Anstellwinkeldetektoren (14), mehrere der Direktantriebsleitungen (17), mehrere der Direktantriebsschalter (19), mehrere der Normalantriebsleitungen (16) und mehrere der Normalantriebsschalter (18) in einer Eins-zu-eins-Entsprechung zu mehreren der Flügel (104), die an der Windkraftanlage (100) angeordnet sind, vorhanden sind,
die Direktantriebsleitungen (17) mit derselben direkten Stromquelle (112) über eine gemeinsame Direktantriebsleitung (20), die dafür ausgelegt ist, durch die Direktantriebsleitungen (17) gemeinsam genutzt zu werden, verbunden sind, und
die gemeinsame Direktantriebsleitung (20) mit einem Direkte-Stromquelle-Schalter (21) versehen ist, der in der Lage ist, zwischen einem Zustand, in dem die direkte Stromquelle (112) und die Direktantriebsleitungen (17) miteinander verbunden sind, und einem Zustand, in dem sie voneinander getrennt sind, umzuschalten.

5. Steuervorrichtung für den Anstellwinkel einer Windkraftanlage (2) nach Anspruch 4,
wobei jede der Normalantriebsleitungen (16) mit einem unabhängigen Antriebsschalter (24) zwischen den Normalantriebsschaltern (18) und den Elektromotoren (11) versehen ist, wobei der unabhängige Antriebsschalter (24) in der Lage ist, zwischen einem Zustand, in dem die Normalantriebsschalter (18) und die Elektromotoren (11) miteinander verbunden sind, und einem Zustand, in dem sie voneinander getrennt sind, umzuschalten,
wobei die Direktantriebsleitungen (17) mit den jeweiligen Normalantriebsleitungen (16) zwischen den Normalantriebsschaltern (18) und den unabhängigen Antriebsschaltern (24) verbunden sind,
wobei jeder der Anstellwinkeldetektoren (14) mit allen Motorsteuereinheiten (13) verbunden ist, so dass sie in der Lage sind, ein Detektionsergebnissignal an diese zu senden, und
wenn eine Anomalie in einer der Motorsteuereinheiten (13) aufgetreten ist, die Anstellwinkelsteuerung für den Flügel (104), die einer fehlerhaften Steuereinheit entspricht, welche die Motorsteuereinheit (13) ist, in der die Anomalie aufgetreten ist, und die Anstellwinkelsteuerung für den Flügel (104), die einer normalen Steuereinheit entspricht, welche die Motorsteuereinheit (13) ist, die normal ist und sich von der fehlerhaften Steuereinheit unterscheidet, unabhängig durch die normale Steuereinheit ausgeführt werden, da der unabhängige Antriebsschalter (24), welcher der normalen Steuereinheit entspricht, und der unabhängige Antriebsschalter (24), welcher der fehlerhaften Steuereinheit entspricht, umgeschaltet werden.

6. Steuervorrichtung für den Anstellwinkel einer Windkraftanlage (2) nach einem der Ansprüche 1 bis 5, wobei mehrere der Elektrizitätsakkumulatoren (12) in einer Eins-zu-eins-Entsprechung zu mehreren der Motorsteuereinheiten (13) vorhanden sind,
mehrere Hauptstromquellenleitungen (22), die mit den jeweiligen Motorsteuereinheiten (13) verbunden sind, so angeordnet sind, dass sie Elektrizität von der Hauptstromquelle (111) zu ihnen leiten,
die Hauptstromquellenleitungen (22) mit derselben Hauptstromquelle (111) über eine gemeinsame Hauptstromquellenleitung (23) verbunden sind, die dafür ausgelegt ist, durch die Hauptstromquellenleitungen (22) gemeinsam genutzt zu werden, und
die gemeinsame Hauptstromquellenleitung (23) mit einem Hauptstromquellenschalter (25) versehen ist, der in der Lage ist, zwischen einem Zustand, in dem die Hauptstromquelle (111) und die Hauptstromquellenleitungen (22) miteinander verbunden sind, und einem Zustand, in dem sie voneinander getrennt sind, umzuschalten.

## Revendications

1. Dispositif de commande de pas d'éolienne (1, 2) qui comprend un accumulateur d'électricité (12) capable d'appliquer de l'électricité à un moteur électrique (11) couplé à un dispositif de commande de pas (108) pour changer un angle de pas d'une pale (104) d'une éolienne (100) qui est disposée de manière rotative sur une partie d'arbre principal (103) de l'éolienne, et qui est capable de commander l'angle de pas de la pale (104) avec l'électricité de l'accumulateur d'électricité (12), de telle sorte que l'angle de pas est changé dans une direction dans laquelle une pression de vent exercée sur la pale (104) est réduite, le dispositif de commande de pas d'éolienne (1, 2) comprenant :
un contrôleur de moteur (13) configuré pour commander le stockage et la décharge de l'électricité dans et à partir de l'accumulateur d'électricité (12), et pour commander le moteur électrique (11) sur la base d'un signal de commande pour la commande de pas pour changer l'angle de pas de la pale (104) à partir d'un contrôleur de pas (50) qui transmet le signal de commande ;
un détecteur de puissance restante de batterie (15) configuré pour détecter une puissance restante de batterie de l'accumulateur d'électricité (12) ; et
un détecteur d'angle de pas (14) configuré pour détecter l'angle de pas de la pale ;
dans lequel le contrôleur de moteur (13) est relié à une source d'alimentation principale (111) qui est une source d'alimentation pour fournir de l'électricité pendant le fonctionnement normal, de sorte que l'électricité est fournie au contrôleur de moteur (13), et au moment d'une perte d'une capacité d'alimentation en électricité de la source d'alimentation principale (111), le contrôleur de moteur (13) commande le moteur électrique (11) avec l'électricité fournie par l'accumulateur d'électricité (12) et poursuit la commande de pas, sur la base du signal de commande, et agit pour modifier l'angle de pas de la pale (104) de manière à effectuer une commande de changement de pas lorsque la puissance restante détectée par le détecteur de puissance restante (15) de la batterie est inférieure ou égale à une valeur prédéterminée, tandis que la commande de pas est effectuée en continu avec l'électricité fournie par l'accumulateur d'électricité (12) ;
**caractérisé en ce que**, si la puissance restante détectée par le détecteur de puissance restante de batterie (15) devient inférieure ou égale à une limite inférieure prédéterminée qui est encore inférieure à la valeur prédéterminée, tandis que la commande de pas est poursuivie avec l'électricité provenant de l'accumulateur d'électricité (12), la commande de changement de pas est effectuée avec une source d'alimentation directe (112) qui est différente de la source d'alimentation principale (111) et est reliée au moteur électrique (11) ; et
dans lequel la commande de changement de pas est arrêtée à une position prédéterminée sur la base du résultat de la détection par le détecteur d'angle de pas (14) pour achever l'opération de commande de changement de pas.

2. Dispositif de commande de pas d'éolienne (1, 2) selon la revendication 1,
dans lequel une pluralité des contrôleurs de moteur (13) sont prévus dans une correspondance biunivoque avec une pluralité des pales (104) prévues sur l'éolienne (100), et si une anomalie se produit dans l'un quelconque des contrôleurs de moteur (13), la commande de pas pour la pale (104) correspondant à un contrôleur anormal, qui est le contrôleur de moteur (13) dans lequel l'anomalie s'est produite, est effectuée par un contrôleur normal qui est le contrôleur de moteur (13) qui est normal et différent du contrôleur anormal.

3. Dispositif de commande de pas d'éolienne (1, 2) selon la revendication 1,
dans lequel le moteur électrique (11) est prévu sous la forme d'un moteur à induction, et
le dispositif de commande de pas d'éolienne (1, 2) comprend en outre :
une ligne de commande normale (16) qui relie le contrôleur de moteur (13) au moteur électrique (11), et peut fournir l'électricité au moteur électrique (11) pendant le fonctionnement normal ;
une ligne de commande directe (17) qui relie directement, ou par l'intermédiaire de la ligne de commande normale (16), le moteur électrique (11) à une source d'alimentation directe (112) fournie sous la forme d'une source d'alimentation à courant alternatif qui est différente de source d'alimentation principale (111), et qui peut fournir l'électricité à partir de la source d'alimentation directe (112) au moteur électrique (11) et entraîner le moteur électrique (11) ;
un commutateur de commande normale (18) qui est prévu sur la ligne de commande normale (16) et peut basculer entre un état dans lequel le contrôleur de moteur (13) et le moteur électrique (11) sont reliés l'un à l'autre, et un état dans lequel ils sont déconnectés l'un de l'autre ; et un commutateur de commande directe (19) qui est prévu sur la ligne de commande directe (17) et peut basculer entre un état dans lequel la source d'alimentation directe (112) et le moteur électrique (11) sont reliés l'un à l'autre, et un état dans lequel ils sont déconnectés l'un de l'autre.

4. Dispositif de commande de pas d'éolienne (1, 2) selon la revendication 3,
dans lequel une pluralité des contrôleurs de moteur (13), une pluralité des détecteurs d'angle de pas (14), une pluralité des lignes de commande directe (17), une pluralité des commutateurs de commande directe (19), une pluralité des lignes de commande normale (16), et une pluralité des commutateurs de commande normale (18) sont prévus dans une correspondance biunivoque avec une pluralité des pales (104) prévues sur l'éolienne (100), les lignes de commande directe (17) sont reliées à la même source d'alimentation directe (112) par l'intermédiaire d'une ligne de commande directe commune (20) prévue pour être partagée par les lignes de commande directe (17), et la ligne de commande directe commune (20) est pourvue d'un commutateur de source d'alimentation directe (21) capable de basculer entre un état dans lequel la source d'alimentation directe (112) et les lignes de commande directe (17) sont reliées les unes aux autres, et un état dans lequel elles sont déconnectées les unes des autres.

5. Dispositif de commande de pas d'éolienne (2) selon la revendication 4,
dans lequel chacune des lignes de commande normale (16) est pourvue d'un commutateur de commande indépendant (24) entre les commutateurs de commande normale (18) et les moteurs électriques (11), le commutateur de commande indépendant (24) pouvant basculer entre un état dans lequel les commutateurs de commande normale (18) et les moteurs électriques (11) sont reliés les uns aux autres, et un état dans lequel ils sont déconnectés les uns des autres,
les lignes de commande directe (17) sont reliées aux lignes de commande normale respectives (16) entre les commutateurs de commande normale (18) et les commutateurs de commande indépendante (24),
chacun des détecteurs d'angle de pas (14) est relié à l'ensemble des contrôleurs de moteur (13) de manière à pouvoir leur transmettre un signal de résultat de détection, et
si une anomalie se produit dans l'un quelconque des contrôleurs de moteur (13), la commande de pas pour la pale (104) correspondant à un contrôleur anormal, qui est le contrôleur de moteur (13) dans lequel l'anomalie s'est produite, et la commande de pas pour la pale (104) correspondant à un contrôleur normal, qui est le contrôleur de moteur (13) qui est normal et différent du contrôleur anormal, sont effectuées indépendamment par le contrôleur normal en raison du basculement du commutateur de commande indépendante (24) correspondant au contrôleur normal et du commutateur de commande indépendante (24) correspondant au contrôleur anormal.

6. Dispositif de commande de pas d'éolienne (2) selon l'une quelconque des revendications 1 à 5,
dans lequel une pluralité des accumulateurs d'électricité (12) sont prévus dans une correspondance biunivoque avec une pluralité des contrôleurs de moteur (13),
une pluralité de lignes de source d'alimentation principale (22) reliées aux contrôleurs de moteur respectifs (13) sont prévues de manière à leur fournir de l'électricité à partir de la source d'alimentation principale (111),
les lignes de source d'alimentation principale (22) sont reliées à la même source d'alimentation principale (111) par l'intermédiaire d'une ligne de source d'alimentation principale commune (23) prévue pour être partagée par les lignes de source d'alimentation principale (22) et
la ligne de source d'alimentation principale commune (23) est pourvue d'un commutateur de source d'alimentation principale (25) capable de basculer entre un état dans lequel la source d'alimentation principale (111) et les lignes de source d'alimentation principale (22) sont reliées les unes autres, et un état dans lequel elles sont déconnectées les unes des autres.
